# EUROPEAN PATENT APPLICATION

(11) **EP 2 077 522 A1**
(43) Date of publication of application: **08.07.2009**
(21) Application number: 07301741.0
(22) Date of filing: 24.12.2007
(51) Int. Cl.: G06Q 30/00

(54) **Method for valuing relationships between users of a social networking system**

(71) Applicant: FRANCE TELECOM, 75015 Paris (FR)
(72) Inventor: Hu, Fan, NW10 8AP London (GB); Tibett, Richard, E6 5NE London (GB)
(74) Representative: Cabinet Plasseraud

(57) **Abstract**

The invention proposes a method for valuing relationships between users (A,B,C,C') of a social networking system, each user holding a respective electronic device for communicating through the social networking system, and information relating to each user being stored in at least one memory. According to the method, a relationship between a first user (A) and a second user (B) who is defined as a first degree contact of the first user in the social networking system is valued by taking account of an amount of the information relating to the first user stored in said memory that the first user is willing to share with the second user.

## Description

The present invention relates to relationship valuing in a social networking system.

Social networking systems have developed dramatically in the recent years.
One of their basic aims is to make users come into contact with each other, in particular to share information.

Among the most famous social networking systems, one can cite MySpace and Facebook which are general-interest systems, or Linkedln which is more professional and business oriented. There are many other systems of course, including a lot of systems dedicated to very specific topics.

The information that can be shared as well as their use can be various, depending on the type of social networking system. They can comprise for example online and offline contact details, favourite things, Web links or content (audio, video, text), etc.

Although social networking systems create social relationships between users, there is currently no means for such computer-based systems to interpret the meaning of those relationships.

Such interpretation would be useful however, for instance to help any user assess the confidence level he can have in another user with whom he is not involved in a direct relationship initially.

An object of the present invention is to answer this need.

The invention proposes a method for valuing relationships between users of a social networking system, each user holding a respective electronic device for communicating through the social networking system, information relating to each user being stored in at least one memory. According to this method, a relationship between a first user and a second user who is defined as a first degree contact of the first user in the social networking system is valued by taking account of an amount of the information relating to the first user stored in said memory that the first user is willing to share with the second user.

The obtained relationship value is fairly objective as it depends on an amount of the information relating to the first user stored in said memory that the first user is willing to share with the second user. In that sense, it may be considered as representative of the level of confidence the first user may have in the second user.

Furthermore, the relationship value can be interpreted by computer-based systems, as it can take the form of a single number.

Advantageously, sensitivity of the information relating to the first user stored in said memory may further be taken into account in the relationship valuing.

The method can also be used to value a relationship between the first user and a third user of the social networking system who is defined as a first degree contact of the second user but not as a first degree contact of the first user. Said relationship may indeed be valued by taking account of the relationship value between the first user and the second user and the relationship value between the second user and the third user.

The resulting relationship value between the first user and the third user may advantageously be used to determine an amount and/or sensitivity of the information relating to the first user stored in said memory that the first user can share with the third user.

The invention also proposes a social networking system arranged for implementing the above mentioned method, the social networking system allowing relationships between users each holding a respective electronic device for communicating through the social networking system, information relating to each user being stored in at least one memory. The social networking system comprises means for valuing a relationship between a first user and a second user who is defined as a first degree contact of the first user in the social networking system, by taking account of an amount of the information relating to the first user stored in said memory that the first user is willing to share with the second user.

The invention also proposes a server of a social networking system allowing relationships between users each holding a respective electronic device for communicating through the social networking system, information relating to each user being stored in at least one memory. The server is arranged for implementing the above mentioned method and comprises means for valuing a relationship between a first user and a second user who is defined as a first degree contact of the first user in the social networking system, by taking account of an amount of the information relating to the first user stored in said memory that the first user is willing to share with the second user.

The invention also proposes a computer program product comprising code instructions for carrying out the above mentioned method, when loaded and run on computer means.

The preferred features of the above aspects which are indicated by the dependent claims may be combined as appropriate, and may be combined with any of the above aspects of the invention, as would be apparent to a person skilled in the art.
- FIG.1 shows an example of a social networking system having a plurality of users in which the invention may take place;
- FIG.2 shows an exemplary access profile that a user assigns to a first degree contact user according to an advantageous implementation embodiment of the invention; and
- FIG.3 shows, in a schematic way, a valuing mode for relationships between non first degree contact users.

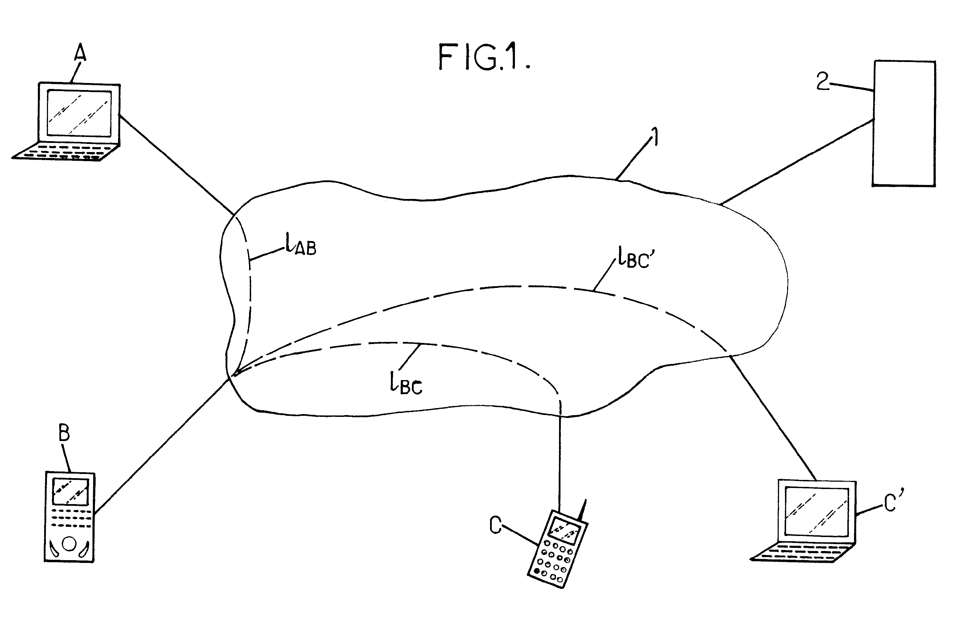

FIG.1 shows a non-limiting example of a social networking system having a plurality of users A, B, C and C'.

The social networking system makes use of equipments 1 which allow a communication between the users. Those equipments may comprise access network devices which provide an interface with some of the users (e.g. xDSL devices to connect the users A and C', WiFi or Bluetooth means to connect the user B, and radio access network devices of the GSM, 3G or WiMax type for the user C), as well as corresponding core network devices, such as switches or routers, which provide appropriate means to correctly direct the traffic received from or sent to the access network devices.

The technology on which the social networking system is based can be of any type. It includes but is not limited to Internet, Intranets and IP-based networks.

An application layer is further provided in the social networking system to allow the users to communicate and share information with each other, as well known in the art.

Each user of the social networking system holds an electronic device for communicating through the social networking system. As an example, the users A and C' each hold a computer or a laptop, the user B holds a personal digital assistant (PDA) and the user C holds a mobile phone. Of course, other electronic devices would be suitable as well.

Information relating to each user is stored in one or several memories. For instance, the memories may be embedded in the electronic devices. In this case, each electronic device may advantageously store information relating to the user it belongs to. Alternatively, the memory may be part of any other device or system of the social networking system. As an example, it may be associated with the server 2 that will be described below. It may also be distributed across multiple servers and/or systems.

The information stored in relation to each user can comprise for example online and offline contact details, favourite things, Web links or content (audio, video, text), etc.

Besides, social relationships may exist between the users of the social networking system. As an example, the user B may be defined as a first degree contact of the user A, as symbolized by the dashed link I_{AB} therebetween in FIG.1. This means that A may know B and has a certain level of confidence in him.

It can also be considered that the user A and the user B are first degree contacts of each other when they have reached a mutual agreement, which is realised electronically, to be connected directly to each other via a social networking service and appear in each other's contact list of the social network application running on their personal electronic devices.

Due to this confidence, A may be willing to share with B a certain amount of his information (that is the information relating to A which is stored in said memory). Naturally, this amount of information as well as the type of information A may be willing to share with B may be highly dependent on the type of relationship they have with each other. For instance, if B has been a close friend of A for a long time or one of his family members, then A may be willing to share all his stored information with B. In contrast, if B has recently come into a relationship with A, A may prefer to share only a small amount of his stored information with B.

Likewise, C and C' may be defined as first degree contacts of B, as symbolized respectively by the dashed links I_{BC} and I _{BC'} in FIG.1.

By contrast, C and C' are not first degree contacts of A, perhaps because A does not know them. However, C or C' may be considered as second degree contacts of A, as they are first degree contacts of B who is a first degree contact of
A. Moreover, it is possible that, at one point, A may be interested in starting a direct relationship with C or C'.

According to the invention, a value is assigned to the relationship between A and his first degree contact B. This value, also called RV for "relationship value" in the following, is obtained by taking account of the amount of the information relating to A stored in said memory that A is willing to share with B.

As an example, the RV can be calculated in a sliding scale between 0 and 100, where 0 would equate to a very close relationship in which every stored information is shared and 100 would equate to a very distant relationship in which none of the stored information is shared.

Such RV is believed to be a good measurement of the relationship between two users, because, as mentioned above, the amount of personal information shared with a contact user would generally depend on the confidence level in this contact user.

It will be understood that different RVs may be obtained for the relationships A->B and B->A, especially if A and B are not willing to share the same amount of personal information with one another. It could be decided however that the same RV, e.g. the highest value of the two corresponding RVs, applies for both directions A->B and B->A.

According to an advantageous implementation embodiment of the invention, two types of profiles may be associated to a user of the social networking system. With respect to the user A, those profiles could be:
- a user profile containing a list of the information relating to A which are stored in said memory ; and
- one or several access profiles containing an allow/deny list on the content of the user profile.

Each first degree contact of A in the social networking system, namely the user B in the illustrated example, is assigned one of A's access profiles.

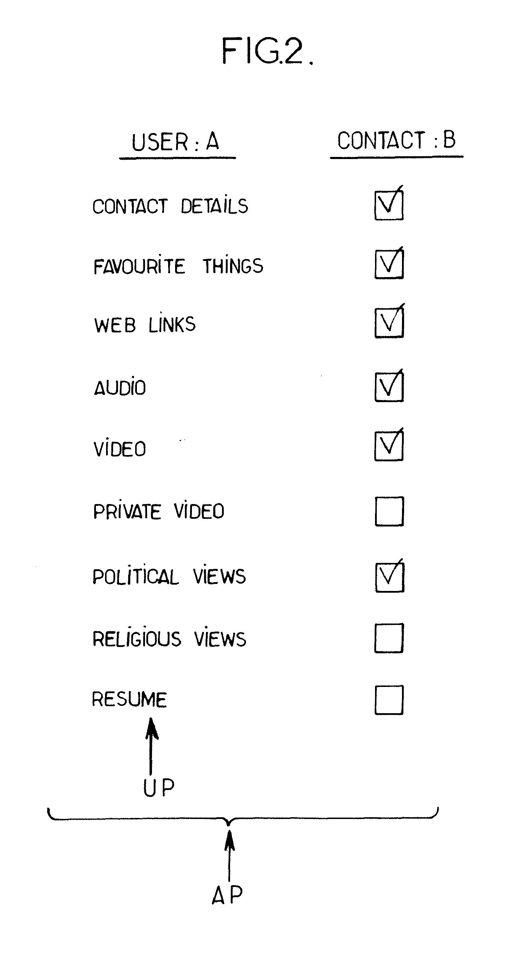

FIG.2 shows an exemplary access profile of A assigned to B. In this example, the A's information forming A's user profile UP is divided into a number of categories. The A's access profile AP assigned to B allows the latter to access some of A's information (contact details, favourite things, Web links, audio, video and political views), but not some others (private video, religious views and resume).

When using such profiles UP and AP, the amount of the information relating to A stored in said memory that A is willing to share with B, which will be used in the RV calculation, may advantageously be calculated from AP. For instance, with reference to FIG.2, AP shows that A is willing to share with B six information items out of the nine information items contained in UP.

According to an advantageous embodiment of the invention, the relationship valued between A and B may further take account of a sensitivity of the information relating to A stored in said memory.

With reference to FIG.2, it could be argued that the A's information inaccessible to B (private video, religious views and resume) are sensitive information in absolute terms or in comparison with the other A's information (contact details, favourite things, Web links, audio, video and political views).

A first degree contact of A that would have access to those sensitive information could be considered as having a closer relationship with A than B. This could be reflected in the RV determination.

To do so, each piece of information of the information relating to A stored in said memory may be assigned a weight depending on the respective sensitivity of said piece of information, and the RV between A and B may further take account of at least some of those weights.

For example, weights may be assigned in a sliding scale of the sensitivity of a piece of information set between 1 and 20, where 1 relates to non sensitive information and 20 relates to highly sensitive information. A global, system-defined weighting table for each of the pieces of information entered in a user profile would of course be an asset.

When using such weights, the RV between A and B may be calculated for instance as 100 - ((x/y)*100), where x represents the total weight of the information relating to A stored in said memory that A is willing to share with B and y represents the total weight of the information relating to A stored in said memory.

That formula would cause the RV to be in the range of 0 to 100, where 0 would equate to a very close relationship with A (every A's information is shared with B) and 100 would equate to a very distant relationship with A (none of A's information is shared with B).

As a simplified example described with reference to FIG.2, if all the pieces of information relating to the six categories accessible to B (contact details, favourite things, Web links, audio, video and political views) are assigned the weight 5, while all the pieces of information relating to the three categories inaccessible to B (private video, religious views and resume) are assigned the weight 10, the RV between A and B would thus be determined as 100 - ((6*5)/(6*5+3*10)*100), i.e. 50.

As it will appear to one skilled in the art, the present invention thus allows to objectively describe a relationship between two users of the social networking system, in a machine readable manner, i.e. in a way which is interpretable by a computer system. This description of the relationship is quite simple as it can consist in a single number that may represent the strength of the relationship and, if sensitivity of the information is taken into account, the intimacy of the relationship.

Advantageously, the RV determination can be completely automated and managed by the social networking system, for example by a central server 2 as shown in FIG.1, to ensure a consistent and globally understood calculation of the relationship value. Alternatively, the RV determination may be carried out by the concerned user directly. An RV determination performed in a distributed way between the concerned user and the social networking system is also possible.

A computer program can be used for the RV determination. This program may be loaded and run on computer means of the user's electronic device and/or the central server 2 and/or any other device of the social networking system.

The RV between A and B may be updated after a change in the amount of the information relating to A stored in said memory that A is willing to share with B. This change may result for example from a modification of the type of relationship between A and B, e.g. from acquaintance to close friendship. It can also result from the addition of new categories in the A's user profile or the assignment of another A's access profile to B, etc.

One application of the above mentioned RV calculation would be for a user of the social networking system to value a potential relationship with another user who is not a first degree contact, but only a N^{st} degree contact, with N>1.

With respect to the example shown in FIG.1, this means that the user A may value his relationship with the users C and C' who are first degree contacts of B but only second degree contacts of A (i.e. first degree contacts of the A's first degree contact B), based on the RVs obtained for both relationships A-B and B-C or B-C'.

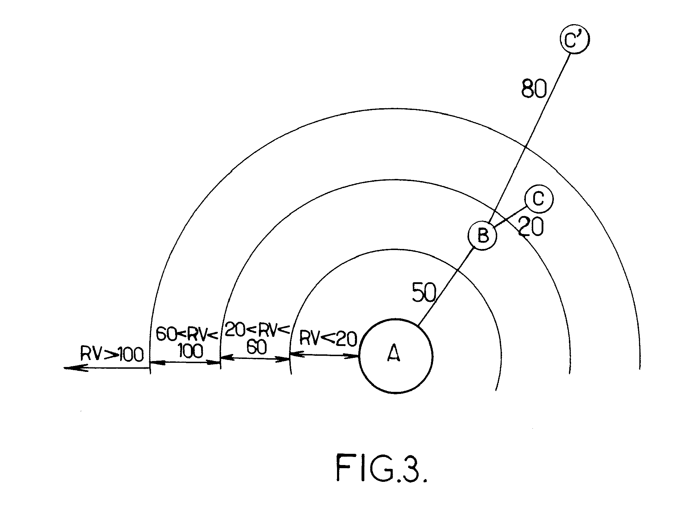

FIG.3 illustrates this embodiment in a schematic way. It is assumed that the RV calculated as explained above for the relationship between A and B is 50 in a range of 0 to 100. Likewise, the RV calculated for the relationship between B and C is assumed to equate 20, while the RV calculated for the relationship between B and C' is assumed to equate 80.

In FIG.3, those values have been represented in a sort of target, in the center of which the user A is placed. The target defines four zones corresponding to ranges of RVs for relationships involving A. In the illustrated example, the four zones respectively correspond to RV<20, 20<RV<60, 60<RV<100 and RV>100 with respect to A.

B is placed in the target according to the RV value of 50 of the relationship between A and B. The distance between A and B is proportional to the corresponding RV. Consequently, B is located in the second zone of the target from the center, that is the zone corresponding to 20<RV<60.

The users C and C' can then be placed in the target according to the RV value, respectively of 20 and 80, of the relationship they have with B. This brings C in the zone corresponding to 60<RV<100, and C' in the zone corresponding to RV>100. For clarity, the links B-C and B-C' have been drawn with different directions. However, they could have the same direction and be in the continuation of the link A-B.

C thus appears as having a fairly distant relationship with A and C' appears as having a very distant relationship with A.

The relationship valuing described with reference to FIG.3 is comparable to a mere summation of RVs. This means that the RV between A and C (or C'), noted RV(A,C) (or RV(A,C')), could be valued as the sum of RV(A,B) and RV(B,C) (or RV(B,C')). More generally, RV(A,C) (or RV(A,C')) could be valued as a function f of RV(A,B) and RV(B,C) (or RV(B,C')), where f can be a sum or any other appropriate operator or combination of operators.

When f is a simple sum function, the value of the relationship between A and C obtained from the example illustrated in FIG.3 is RV(A,C)=50+20=70. As for the relationship between A and C', a simple summation would return the value RV(A,C')=50+80=130. RV(A,C') may thus be limited to the value of 100, which is the highest possible RV.

Just like the above mentioned valuing of RV(A,B), the valuing of RV(A,C) and RV(A,C') may be completely automated and managed by the social networking system, for example by the central server 2 as shown in FIG.1, to ensure a consistent and globally understood calculation of the relationship value. Alternatively, it may be carried out by the user A directly or in a distributed way between the user A and the social networking system.

A computer program can be used for the RV determination. This program may be loaded and run on computer means of A's computer and/or the central server 2 and/or any other device of the social networking system.

It will be noted that the same principles may be used by recurrence for A to value a relationship with a N^{st} degree contact, with N>2.

On the basis of the obtained values of RV(A,C) and RV(A,C'), A may decide to share only part of his information with C, e.g. only non sensitive information, and to share no information with C'. In other words, the amount of the information relating to A stored in said memory that A can share with C (or C') may advantageously depend on the distance between A and C (or C') in the target of FIG.3. Likewise, the sensitivity of the information relating to A stored in said memory that A can share with C (or C') may advantageously depend on the distance between A and C (or C') in the target of FIG.3.

Such mode of operation thus creates further value in the social networking system.

## Claims

1. A method for valuing relationships between users (A,B,C,C') of a social networking system, each user holding a respective electronic device for communicating through the social networking system, information relating to each user being stored in at least one memory, wherein a relationship between a first user (A) and a second user (B) who is defined as a first degree contact of the first user in the social networking system is valued by taking account of an amount of the information relating to the first user stored in said memory that the first user is willing to share with the second user.

2. The method as claimed in claim 1, wherein a user profile (UP) of the first user (A) contains a list of the information relating to the first user stored in said memory and at least one access profile of the first user contains an allow/deny list on the content of the user profile, each first degree contact of the first user in the social networking system being assigned one of said at least one access profile of the first user, and wherein the amount of the information relating to the first user stored in said memory that the first user is willing to share with the second user (B) is calculated from the access profile (AP) of the first user assigned to the second user.

3. The method as claimed in claim 1 or 2, wherein the relationship between the first user (A) and the second user (B) is valued by further taking account of a sensitivity of the information relating to the first user stored in said memory.

4. The method as claimed in claim 3, wherein each piece of information of the information relating to the first user (A) stored in said memory is assigned a weight depending on the respective sensitivity of said piece of information, and wherein the relationship between the first user and the second user (B) is valued by taking account of at least some of said weights.

5. The method as claimed in claim 4, wherein the relationship between the first user (A) and the second user (B) is valued as 100-((x/y)*100), where x represents the total weight of the information relating to the first user stored in said memory that the first user is willing to share with the second user and y represents the total weight of the information relating to the first user stored in said memory.

6. The method as claimed in any one of the foregoing claims, wherein the relationship value between the first user (A) and the second user (B) is updated after a change in the amount of the information relating to the first user stored in said memory that the first user is willing to share with the second user.

7. The method as claimed in any one of the foregoing claims, wherein a relationship between the second user (B) and a third user (C,C') who is defined as a first degree contact of the second user in the social networking system but not as a first degree contact of the first user (A), is valued by taking account of an amount of the information relating to the second user stored in said memory that the second user is willing to share with the third user, and wherein a relationship between the first user and the third user is valued by taking account of the relationship value between the first user and the second user and the relationship value between the second user and the third user.

8. The method as claimed in claim 7, wherein the relationship value between the first user (A) and the third user (C,C') is used to determine an amount of the information relating to the first user stored in said memory that the first user can share with the third user.

9. The method as claimed in claim 7 or 8, wherein the relationship value between the first user (A) and the third user (C,C') is used to determine sensitivity of the information relating to the first user stored in said memory that the first user can share with the third user.

10. A social networking system arranged for implementing the method as claimed in any one of the foregoing claims, the social networking system allowing relationships between users (A,B,C,C') each holding a respective electronic device for communicating through the social networking system, information relating to each user being stored in at least one memory, the social networking system comprising means for valuing a relationship between a first user (A) and a second user (B) who is defined as a first degree contact of the first user in the social networking system, by taking account of an amount of the information relating to the first user stored in said memory that the first user is willing to share with the second user.

11. A server (2) of a social networking system allowing relationships between users (A,B,C,C') each holding a respective electronic device for communicating through the social networking system, information relating to each user being stored in at least one memory, the server being arranged for implementing the method as claimed in any one of claims 1-9 and comprising means for valuing a relationship between a first user (A) and a second user (B) who is defined as a first degree contact of the first user in the social networking system, by taking account of an amount of the information relating to the first user stored in said memory that the first user is willing to share with the second user.

12. A computer program product comprising code instructions for carrying out the method as claimed in any one of claims 1-9, when loaded and run on computer means.
